Europäisches Patentamt

European Patent Office

Office européen des brevets

(11) Publication number: **0 426 047 A2**

# EUROPEAN PATENT APPLICATION

(21) Application number: 90120629.2

(22) Date of filing: 27.10.90

(51) Int. Cl.5: **G01N 21/47, G01N 21/84**

(30) Priority: 30.10.89 JP 126880/89

(43) Date of publication of application:
08.05.91 Bulletin 91/19

(84) Designated Contracting States:
**BE DE FR GB IT NL SE**

(71) Applicant: TERUMO KABUSHIKI KAISHA
No. 44-1, Hatagaya 2-chome, Shibuya-ku
Tokyo 151(JP)

Applicant: YAMATAKE-HONEYWELL CO., LTD.
12-19, Shibuya 2-chome Shibuya-ku
Tokyo 150(JP)

(72) Inventor: Suzuki, Yoshiro

1727-1, Tsukijiarai, Showacho
Nakakoma-gun, Yamanashi(JP)
Inventor: Murata, Kazuhiko
1188-8, Endo
Fujiwasa-city, Kanagawa(JP)
Inventor: Miura, Satoshi
5458-4, Serizawa
Chigasaki-city, Kanagawa(JP)
Inventor: Kawada, Yasushi
2-10-20-312, Minowacho, Kohoku-ku
Yokohama-city, Kanagawa(JP)

(74) Representative: Eisenführ, Speiser & Strasse
Martinistrasse 24
W-2800 Bremen 1(DE)

(54) **Reflected light measuring instrument.**

(57) Disclosed herein is a reflected light measuring instrument for receiving reflected light from an object under measurement, which has an effect that even if a reflection surface of the object under measurement shifts in position in the direction of an optical axis, a quantity of reflected light at the reflection surface is automatically corrected to be substantially constant, whereby the read accuracy on said reflection surface is not lowered at all.

FIG. 2

# REFLECTED LIGHT MEASURING INSTRUMENT

## BACKGROUND OF THE INVENTION

### Field of the Invention :

This invention relates to a reflected light measuring instrument, for example, a reflected light measuring instrument which irradiates light on an object under measurement such as a test piece to which blood is made to adhere and receives the reflected light having the quantity of light in accordance with the color reaction of the test piece (the test papper).

### Description of the Prior Art

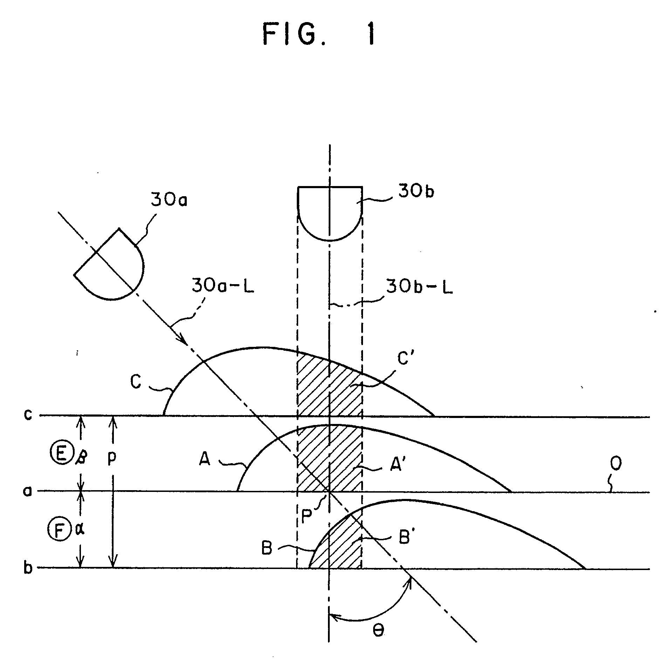

Fig., 1 shows the principle of a conventional reflected light measuring instrument. In Fig. 1, reference numeral 30a is a light emitting element such as a light emitting diode which irradiates light having a specified peak wavelength, 30b a light receiving element such as a photodiode of which optical axis 30b-L is disposed, holding a certain angle $\theta$ to the optical axis 30a-L of the light emitting element 30a, O a reflection surface of the object under measurement disposed perpendicular to the optical axis 30b-L, which varies within the range of a distance $\rho$ due to dispersion of accuracy in mounting components.

Then, the intermediate position of the distance $\rho$ is assumed as a reference position, and the light emitting element 30a and the light receiving element 30b are disposed so that the intersection of their optical axes 30a-L and 30b-L having a largest quantity of reflected light is located at the reference position.

In the constitution described above, when the reflection surface O of the object under measurement shifts to the direction of the optical axis 30b-L of the light receiving element 30b, the optical path changes, resulting in change of the quantity of received light of the light receiving element 30b.

For instance, when the reflection surface O of the object shifts from the reference position a by a distance $\alpha$ and comes to a position b in Fig. 1, the optical path increases by

$$\alpha + \frac{\alpha}{\cos\theta}$$

than that at the time when the reflection surface 0 is located at the reference position a, resulting in decrease in the quantity of received light of the light receiving element.

Also, contrary to the case described above, when the reflection surface O of the object shifts from the reference position a by a distance $\beta$ and comes to a position c in Fig. 1, the optical path decreases by

$$\beta + \frac{\beta}{\cos\theta}$$

than that at the time when the reflection surface O is located at the reference position a, resulting in increase in the quantity of received light of the light receiving element 30b.

Since a conventional reflected light measuring instrument is constituted as described above, the optical path is increased or decreased by change of the position of the reflection surface of the object in the direction of the optical axis, whereby the quantity of received light of the light receiving element increases or decreases, resulting in dispersion of measured values and lowering in the read accuracy for the reflection surface.

## SUMMARY OF THE INVENTION

It is an object of this invention to provide a reflected light measuring instrument of which read accuracy for the reflection surface of an object under measurement is not lowered at all, irrespective of change of an optical path.

It is another object of this invention to provide a reflected light measuring instrument capable of measuring density of a specified ingredient of a sample simply and accurately.

The reflected light measuring instrument related to this invention for attaining the objects described above is as follows. The above-mentioned light emitting element and light receiving element are disposed so that the intersection of the both optical axes of the light emitting element and light receiving element which is located at the position having a greatest quantity of reflected light is formed on the surface of the object under measurement disposed at the farthest position from the light receiving element, whereby even if the reflection surface of the object under measurement shifts in position to the direction of the optical axis of the light receiving element, the quantity of received light of the light receiving element remains substantially equal, resulting in no lowering in the read accuracy for the reflection surface.

## BRIEF DESCRIPTION OF THE DRAWINGS

Fig. 1 is a block diagram explanatory of the principle of a conventional reflected light measuring instrument.

Fig. 2 is a block diagram explanatory of the principle of a reflected light measuring instrument according to an embodiment of this invention.

Fig. 3 is an externally perspective view of an automatic blood-sugar level measuring instrument applied with a reflected light measuring instrument of this invention.

Fig. 4 is a block diagram showing a constitution of an automatic blood-sugar level measuring instrument.

Fig. 5 is a detailed perspective view of an insertion unit for a test piece.

Fig. 6 is a cross-sectional view along the line A-A' in Fig. 5 with the test piece inserted into the insertion unit;

Fig. 7 is a flowchart showing a measurement process in an automatic blood-sugar level measuring instrument.

## DETAILED DESCRIPTION OF THE PREFERRED EMBODIMENT

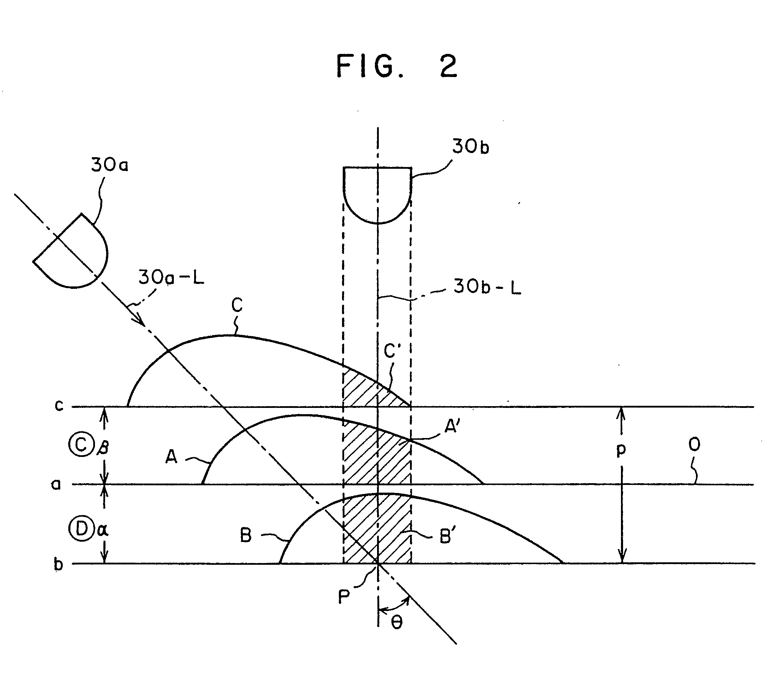

Hereinafter, a preferred embodiment according to this invention will be described in detail in reference to accompany drawings. In Fig. 2 in which the same parts as those in Fig. 1 are identified by the same numerals, the optical axes 30a-L and 30b-L of the light. emitting element 30a and light receiving element 30b hold a certain angle $\theta$ therebetween, and the above-mentioned light emitting element and light receiving element are disposed so that the intersection P of the both optical axes which is located at the position having the greatest quantity of reflected light is formed on the reflection surface O of the object under measurement disposed at the farthest position b from the light receiving element 30b.

According to the constitution of the embodiment, the distributions of the quantity of irradiated light from the light emitting element 30a for the reflection surfaces O of the objects under measurement located at positions a , b, and c become like semi-egg shapes A, B, and C. Here, the heights of the mountains of the semi-egg shapes A, B, and C each represent the strength of light.

The quantity of irradiated light reflects at the positions a, b, and c, the quantity of reflected light are represented by slant line portions A', B', and C', and the quantity of reflected light at the farthest position b from the light receiving element 30b becomes largest.

As a result, when the reflection surface O forming a reference surface shifts to the position b, the optical path is lengthen by

$$\alpha + \frac{\alpha}{\cos \alpha} .$$

However, since the quantity of reflected light is increased so much, the quantity of the received light of the light receiving element is substantially constant. When the reflection surface O shifts to the position c, the optical path is shortened by

$$\beta + \frac{\beta}{\cos \theta} .$$

However, since the quantity of reflected light is decreased so much, the quantity of received light of the light receiving element 30b is substantially constant. Consequently, the quantity of received light of the light receiving element 30b is automatically corrected and always held substantially constant, whereby the read accuracy for the reflection surface of the object under measurement is not lowered at all.

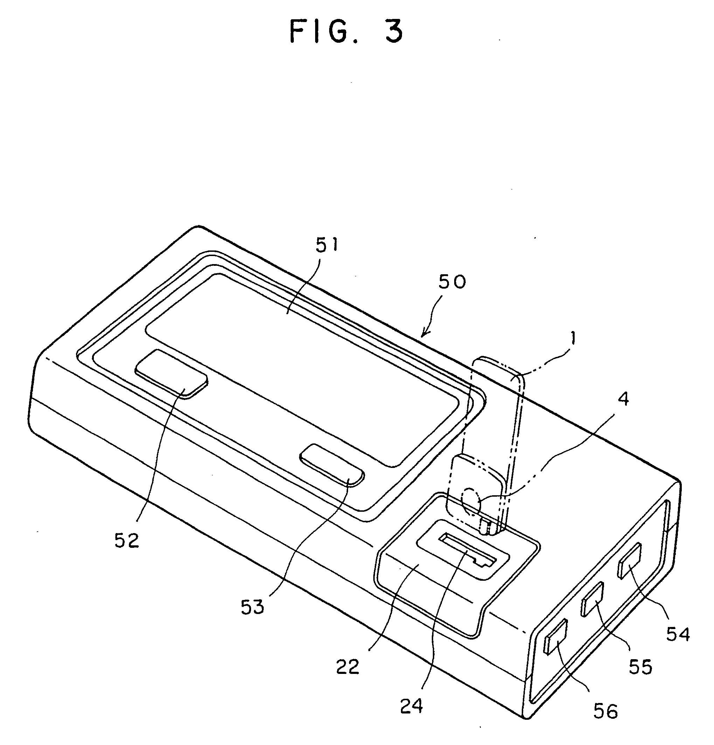

Fig. 3 is an externally perspective view of an automatic blood-sugar level measuring instrument applied with the reflected light measuring instrument according to this invention. In Fig. 3, reference numeral 50 shows a main body unit of an automatic blood-sugar level measuring instrument and 51 is a display unit of such as a liquid crystal for displaying measured results and so forth. Reference numeral 52 is a power switch. When the power source of the instrument 50 is OFF, it is turned ON by depressing down this switch 52, and on the contrary, when the power source is ON, it is turned OFF by depressing down this switch 52. Reference numeral 53 is a memory access switch. Whenever the switch 53 is depressed down, measured results stored in a memory built in the instrument are sequentially read out together with dates and hours of the measurement and displayed on the display unit 51. Reference numeral 1 is a test piece. The test piece 1 is inserted into an opening unit 24 of the instrument 50 to measure a blood-sugar level of blood made to adhere on the test piece 1 through an opening 24 for the test piece 1.

Reference numeral 54 is a storage stop switch. When this switch 54 is not depressed within a predetermined hour in measuring blood-sugar levels, measured blood-sugar levels are automatically stored in a memory. By the depression down of this switch 54 within a predetermined hour after completion of the measurement, it is possible to have a blood-sugar level measured just before the depression of the switch 54 not stored in the memory. By this, when a measured value becomes unusual owing to bad adherence of blood to the test piece 1, another operation mistake and so forth for instance, it is possible to have the value not stored in the memory.

Reference numeral 55 is a set switch. By depressing down this switch 55, it is possible to set values of (month, day, hour, and minute). Reference numeral 56 is an alteration switch, which can be set by altering the date or the time directed by the set switch 55. Once these set switch 55 and alteration switch 56 set the time therein, these switch are hardly employed thereafter.

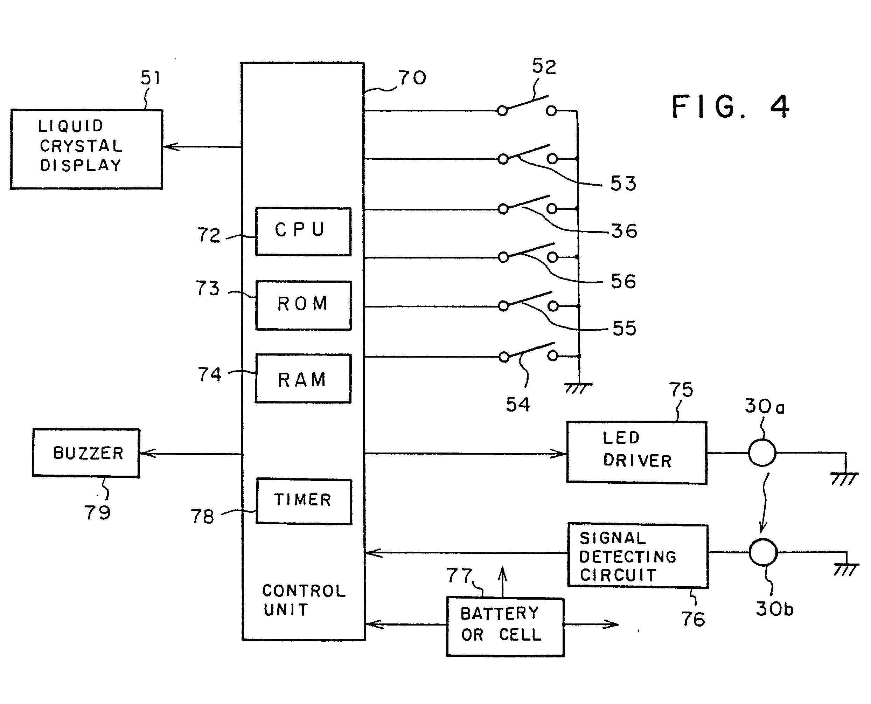

[Description of constitution of instrument (Fig. 4)]

Fig.4 is a block diagram showing a constitution of an automatic blood-sugar level measuring instrument 50. The parts common to those in Fig. 3 are identified by the same numerals, and the description of these parts will be omitted.

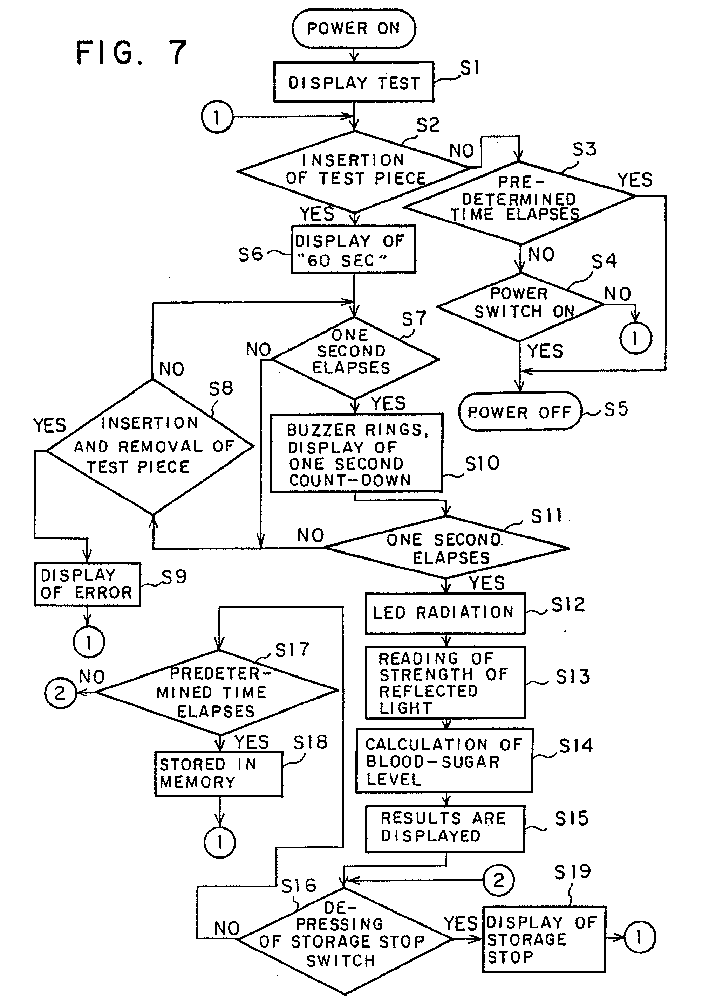

In Fig. 4, reference numeral 70 is a control unit as a control means for controlling the whole of the instrument, which comprises a CPU 72 as a measuring means such as a microprocessor, a ROM 73 which stores a control program and various kinds of data both shown by a flowchart in Fig. 7, a RAM 74 which is used as a work area of the CPU 72 to store measured results and so forth together with dates of measurement, and the like. The control unit 70 inputs thereinto states of various kinds of switches connected thereto, carries out processes corresponding to these inputs, and at the same time, can read out a signal value from the light receiving element 30b for obtaining a blood sugar level, and can display measured results, contents in the memory (RAM 74), and the like on the liquid crystal display 51. Reference numeral 36 is a switch for detecting the insertion of the test piece 1 into the opening unit 24. The swatch 36 is turned ON when the test piece 1 is inserted, whereby the measurement of a blood-sugar level is automatically begun when the power source of the instrument 50 is in an ON-state.

Reference numeral 75 is a driver for the light emitting element. The driver 75 drives, lighting of the light emitting element 30a using a constant current in obedience to directions from the control unit 70. The light emitting element 30a irradiates the rear side of the test piece 1 (an invisible portion of the test piece 1 shown in Fig. 3), the reflected light is detected by the light receiving element 30b, and the blood sugar level of blood are obtained based on the strength of the reflected light . Reference numeral 76 is a signal detecting circuit for converting the detected strength of the reflected light into a voltage value. An analog signal from the signal detecting circuit 76 is input to the control unit 70, A/D converted, and input to the CPU 72 as a digital signal corresponding to the strength of the reflected light. Reference numeral 77 is a battery as a power source which supplies power to the whole of the instrument 50. Reference numeral 78 is a timer provided in the control unit 70, which clocks a predetermined time in obeidence to directions of the CPU 72. Reference numeral 79 is a buzzer which informs an operator of a warning, the elapse of one second during countdown display described later, completion of the measurement, errors, and so forth.

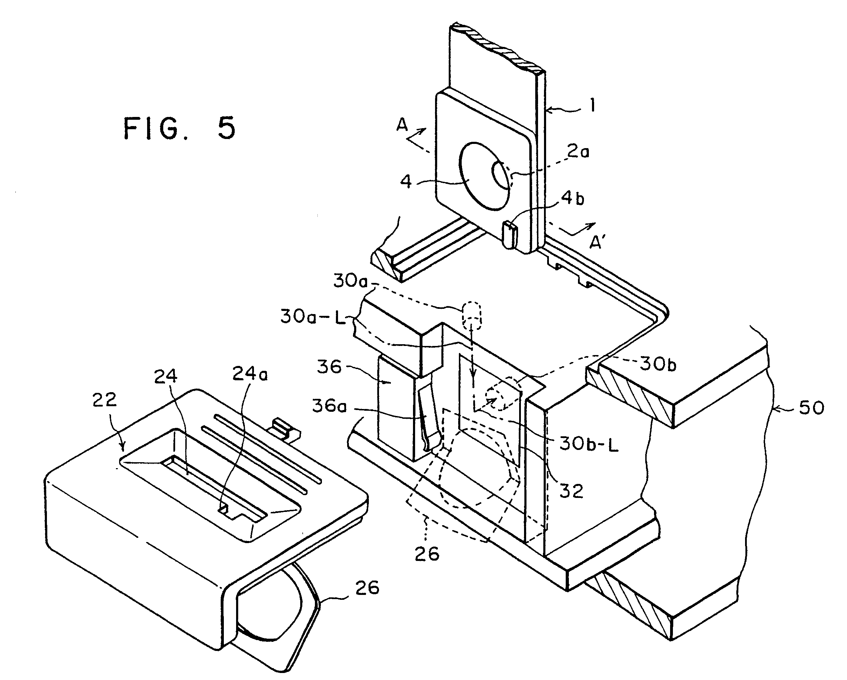

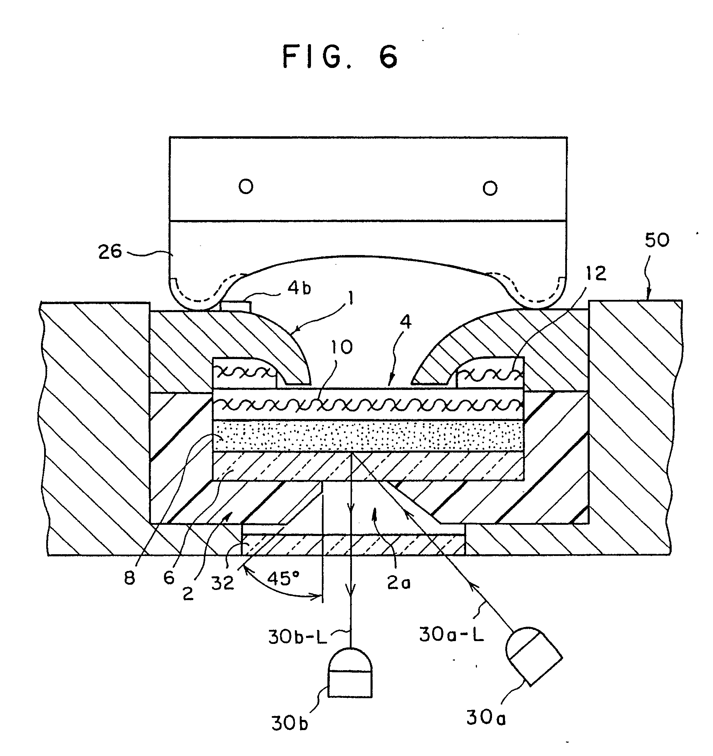

[Description of Insertion Unit of Test Piece (Fig. 5 and Fig. 6]

Fig. 5 is a perspective view showing the detail of the insertion unit of the test piece 1 in the blood sugar level measuring instrument 50 according to the embodiment, and the same parts as those shown in the above-mentioned diagrams are identified by the same numerals in Fig. 5.

Fig. 5 illustrates a state of the instrument 50 with its sub-cover body 22 removed, and the portion shown by a dotted line of a presser bar spring member 26 which presses the opening unit 24 and the test piece 1 shows positions of each unit of the instrument 50 with the sub-cover body 22 mounted. A concavity 4b is engaged with a notch 24a of the opening unit 24 to prevent the test piece 1 from reverse insertion. The test piece 1 inserted into the instrument 50 is pressed toward a transparent plate 32 by the spring member 26. The instrument 50 is constituted so that when the light from the light emitting element 30a irradiates an opening 2a through the transparent plate 32, the reflected light reaches the light receiving element 30b. This constitution will be described in detail with reference to Fig. 6.

Reference numeral 36 is a microswitch as a test piece detecting means for detecting the insertion of the test piece 1 described above. In the insertion of the test piece 1, an actuator 36a of the microswitch 36 is pushed down by the side of the test piece to bring the microswitch 36 into an ON state. By this, the control unit 70 inputs therein a signal from the this switch 36, and can detect the insertion of the test piece 1 into the instrument 50. Incidentally, since this actuator 36a does not turn the switch 36 ON unless the test piece 1 is normally mounted, the defective insertion of the test piece 1 can be also detected by the signal from this switch 36.

Fig. 6 is a sectional view showing a state of the instrument 50 with the test piece 1 mounted on the instrument 50 cut by the line A-A' of Fig. 5.

The blood made to adhere to the test piece 1 through the opening 4 sinks into and spreads in a liquid spreading layer 10 and permeates a reagent layer (a test paper) 8. Reference numeral 12 is a liquid absorbing layer for absorbing surplus blood which is not absorbed into the liquid spreading layer 10. Reference numeral 6 is a transparent translucent layer which transmits light. The light coming from along the optical axis 30a-L of the light emitting element 30a passes through the transparent plate 32 and the translucent layer 6 to be irradiated on the test paper 8, and the reflected light from the reagent layer (test paper) 8 reaches the light receiving element 30b disposed at the position of the optical axis 30b-L which makes an angle of substantially 45 relative to the indident light. By this, the color of reaction of the test paper 8 is read out, allowing the blood-sugar level to be obtained.

Here, the time required until the blood is made to adhere through the opening 4 to permeate the reagent layer 8 through the liquid spreading layer 10 for reaction is about one minute. Accordingly, this automatic blood-sugar level measuring instrument is constituted so that after the test piece 1 is inserted into the instrument 50 and one minute is clocked, the measurement is carried out. Incidentally, reference numeral 2 shows a main body of the test piece 1.

[Descriopion of Operation of Blood-Sugar Level Measuring Instrument (Fig. 3 to Fig. 7)]

Fig. 7 is a flowchart showing the operation of the blood-sugar level measuring instrument according to the embodiment, and a program for executing this process is stored in the ROM 73.

The process in Fig. 7 begins by depressing the power switch 52 of the power source 50 and turning the power source ON. In Step 1, all the items capable of being displayed are displayed for several seconds on the display unit 51 so as to allow whether the function of the display unit 51 is normal or not to be confirmed. Next, the process proceeds to Step 2, in which whether the test piece 1 has been inserted is checked by checking whether the switch 36 is turned ON. If the switch 36 is not turned ON (when the test piece 1 is not inserted), the process proceeds to Step 3, and whether a predetermined time (For example, 5 minitues) elapses is clocked. When the predetermined time elapses, the process proceeds to Step 5, in which the power source of the instrument is turned OFF. When the predetermined time is not clocked in Step 3, the process proceeds to Step 4, in which whether the power switch 52 has been depressed down is checked. When the switch 52 has been depressed, the process proceeds to Step 5, in which the power is turned OFF.

When it is detected that the test piece 1 has been inserted in Step 2, the process proceeds to Step 6, in which "60" seconds are displayed on the display unit 51 to wait for elapse of 1 second in Step 7. When one second elapses, the process proceeds to Step 10, in which a buzzer 79 is rung, and at the same time, one, second is counted down to display the remaining time. Incidentally, these clockings for each time may be carried out by the above-mentioned timer 78 or may be carried out by software using the control program stored in ROM 73. Thus, in Step 11, whether one second elapses is judged, and upon the elapse of one second, the process proceeds to Step 12 in which the process of measurement is carried out. Incidentally, when it is detected that the test piece 1 is removed and mounted by a signal from the switch 36 in this period in Step 8, the process proceeds to Step 9, in which error display is displayed on the display unit 51, and at the same time, the buzzer 79 is rung. In Step 12, a signal is output to the light emitting element driver 75 to cause the light emitting element 30a which had not lighted till then to radiate. In Step 13, the strength of the refelected light detected by the light receiving element 30b is read out. This strength of the reflected light is output from the signal detecting circuit 76, converted into a digital signal in the control unit 70, and input to the CPU 72. When the strength of the reflected light is input in this way, the process proceeds to Step 14, in which the light emitting element 30a is not lighted, and at the same time, the blood-sugar level is ontained based on the strength of the reflected light. For instance, a table which has stored the value of the strength of the reflected light corresponding to the blood-sugar level is prepared for the ROM 72 and so forth in advance, and the blood-sugar level has only to be determined with reference to the table based on the strength of the input reflected light.

When the blood-sugar level is obtained in this way, the process proceeds to Step 15, in which the measured results are displayed on the display unit 51. Incidentally, if the measured value is below a predetermined range in this time, the data showing the effect, for example, "Lo" is displayed on the display unit 51, and on the contrary, if the measured value is over a predetermined range, for example, "Hi" and so forth are displayed. Thus, an operator may be informed of the fact that the measured value is abnormal.

Next, in Step 16 and Step 17, whether the memory stop switch 54 is depressed within a predetermined time (about 3 minutes) is checked. When the switch 54 is not depressed, the process proceeds to Step 18, in which measured results are stored together with the present date in the RAM 74. On the other hand, when the memory stop switch 54 is deoressed in Step 16, the process proceeds to Step 19, in which the stoppage of storage is displayed on the display unit 51, and then the process returns to Step 2.

As described above, since the blood sugar level of the blood under test is automatically measured by inserting the test piece 1 to which blood is made to adhere into the opening unit 24 of the instrument 50, the blood-sugar level can be simply and accurately measured by any one.

Incidentally, in the above description, though there is described only the case where the blood-sugar level is measured, this invention is not limited to this case, but is also applicable to synthesis devices, for example, of uric acid, GTO, GPT, cholesterol, and so forth. Also, as samples, humore of urine, saliva, and so forth may be employed.

As described above, according to this invention, even if the rerflection surface of the object under measurement shifts in position in the direction of the optical axis, the quantity of received light which is reflected from the reflection surface and made incident on the light receiving element is automatically corrected to be substantially constant. Accordingly, there is available an effect that the read accuracy on the reflection surface of the object under measurement is not lowered at all.

Also, there is available an effect that the density of a specified ingredient of the sample made to adhere to the reflection surface of the object under measurement can be simply and accurately measured.

## Claims

1. A reflected light measuring instrument having a light receiving element disposed while an angle is held between its optical axis and an optical axis of a light emitting element and an object under measurement for reflecting the light from said light emitting element, characterized in that said light emitting element and said light receiving element are provided so that the intersection between the optical axes of said light emitting element and said light receiving element is formed on the surface of said object under measurement disposed at the farthest position from said light receiving element.

2. The reflected light measuring instrument according to claim 1, wherein the irradiated light from said light emitting element strikes the reflection surface of said object under measurement obliquely.

3. The reflect light measuring instrument according to claim 1, wherein the reflection surface of said object under measurement is made to shift in the direction of the optical axis of said light receiving element.

4. The reflected light measuring instrument according to claim 1 comprises

a measuring means for finding the density of a ingredient of a sample made to adhere to a test piece based on a detected signal of said light receiving element;

a test piece detecting means for detecting the insertion of said test piece into a main body of the instrument; and

a control means for controlling the reflected light measuring instrument so as to begin the measurement using said measuring means when the insertion of said test piece is detected by said test piece detecting means.

5. The measuring means according to claim 4 is characterized in measuring the density of the specified ingredient of the sample after a predetermined time is clocked since the insertion of the test piece.

# FIG. 1

FIG. 2

EP 0 426 047 A2

# FIG. 3

FIG. 4

LIQUID CRYSTAL DISPLAY — 51

CPU — 72
ROM — 73
RAM — 74
TIMER — 78

CONTROL UNIT — 70

52
53
36
56
55
54

LED DRIVER — 75
30a
30b

SIGNAL DETECTING CIRCUIT — 76

BATTERY OR CELL — 77

BUZZER — 79

FIG. 5

# FIG. 6

FIG. 7